# EUROPÄISCHE PATENTANMELDUNG

(11) **EP 3 987 988 A1**
(43) Veröffentlichungstag der Anmeldung: **27.04.2022**
(21) Anmeldenummer: 20203145.6
(22) Anmeldetag: 21.10.2020
(51) Int. Cl.: A47J 31/44

(54) **GETRÄNKEZUBEREITUNGSMASCHINE MIT EINEM SILIKONABTROPFGITTER**

(71) Anmelder: Tchibo GmbH, 22297 Hamburg (DE)
(72) Erfinder: DANIELS, Micha, 65843 Sulzbach (DE); ERDWIENS, Alexander, 64283 Darmstadt (DE)
(74) Vertreter: Frei Patent Attorneys

(57) **Zusammenfassung**

Die Erfindung betrifft eine Getränkezubereitungsmaschine (1), die einen Auslauf (14) zur Abgabe eines zubereiteten Getränkes, einen Aufnahmebereich (15) zur Aufnahme eines Gefässes zur Aufnahme des zubereiteten Getränkes, sowie ein Abstellelement (21), das den Aufnahmebereich (15) in die dem Auslauf (14) gegenüberliegende Seite begrenzt und auf dem das Gefäss während der Getränkezubereitung abstellbar ist, umfasst. Das Abstellelement (21) ist zumindest teilweise aus einem Elastomer gefertigt.

## Beschreibung

Die Erfindung betrifft eine Getränkezubereitungsmaschine, insbesondere eine Kaffeekapselmaschine, die einen Auslauf zur Abgabe eines zubereiteten Getränkes und eine unterhalb des Auslaufs angeordneten Aufnahmebereich zur Aufnahme eines Gefässes zur Aufnahme des zubereiteten Getränkes aufweist. Der Aufnahmebereich ist zu der dem Auslauf gegenüberliegenden Seite, also nach unten, durch ein Abstellelement begrenzt, auf dem das Gefäss während der Zubereitung des Getränkes abstellbar ist.

Bekannten Kaffeekapselmaschinen weisen einen Auffangbehälter auf, in dem aus dem Auslauf abgegebene und nicht durch ein Gefäss aufgenommen Flüssigkeit aufgefangen wird. Hierbei kann es sich z.B. um Spülflüssigkeit zur Reinigung der Kaffeekapselmaschine, nach dem Entfernen des Gefässes nachgetropften Kaffee oder überschüssigen Kaffee bei der Verwendung eines zu kleinen Gefässes handeln. Auf dem Auffangbehälter ist in der Regel eine lose aufgesetztes Abstellelement, insbesondere ein so genanntes Abtropfgitter, vorgesehen, auf welches das Gefäss während der Getränkezubereitung gestellt werden kann.

Bei bekannten Kaffeekapselmaschinen, wie eine solche beispielsweise in dem Dokument EP 3 205 245 A1 beschrieben ist, ist das Abtropfgitter in der Regel aus einem Metall oder Plastik ausgebildet. Nachteilig hieran ist, dass beim Stellen des Gefässes auf das Abtropfgitter laute und somit störende Geräusche auftreten können. Ferner ist es nachteilig, dass insbesondere Abtropfgitter aus Metall leicht durch die Gefässe verkratzen können und somit ihre Optik und Haltbarkeit beeinträchtigt wird.

Es ist Aufgabe der Erfindung, eine Getränkezubereitungsmaschine anzugeben, die geräuscharm und langlebig ist.

Diese Aufgabe wird durch eine Getränkezubereitungsmaschine mit den Merkmalen des Anspruchs 1 gelöst. Vorteilhafte Weiterbildungen der Erfindung sind in den abhängigen Ansprüchen angegeben.

Erfindungsgemäss weisst die Getränkezubereitungsmaschine einen Auslauf zur Abgabe eines zubereiteten Getränkes, einen Aufnahmebereich zur Aufnahme eines Gefässes zur Aufnahme des zubereiteten Getränkes sowie ein Abstellelement, das den Aufnahmebereich in die dem Auslauf gegenüberliegende Seite begrenzt und auf dem das Gefäss während der Getränkezubereitung abstellbar ist, auf. Das Abstellelement ist zu mindestens teilweise aus einem Elastomer gefertigt.

Ein Abstellelement, insbesondere ein Abtropfgitter, aus einem Elastomer hat den Vorteil, dass beim Aufsetzen des Gefässes viel geringere Geräusche entstehen als bei einem üblichen Abtropfgitter aus Metall oder Plastik. Ferner können Abstellelemente aus einem Elastomer nicht verkratzt.

Das Abstellelement ist insbesondere vollständig aus dem Elastomer gefertigt, so dass eine einfache einstückige Fertigung möglich ist und das gesamte Abstellelement nicht zerkratzen kann.

Bei einer alternativen Ausführungsform kann auch nur ein Teilbereich des Abstellelementes, insbesondere derjenige Teilbereich, auf dem das Gefäss abgestellt wird, aus dem Elastomere gefertigt sein.

Das Elastomer umfasst vorzugsweise einen Naturkautschuk, mindestens einen Silikonkautschuk, mindestens ein Silikon, mindestens ein Silikonharz und/oder ein Fluorsilikon. Alternativ können auch andere Elastomere verwendet werden.

Bei einer besonders bevorzugten Ausführungsform der Erfindung besteht das Abstellelement vollständig aus einem Silikon. Silikone sind besonders langlebig und lassen sich einfach in die gewünschten Formen bringen.

Es ist besonders vorteilhaft, wenn das Abstellelement einstückig ausgebildet ist. Hierdurch wird eine einfache Handhabung erreicht. Das Abstellelement musst insbesondere zum Leeren eines unter ihm angeordneten Auffangbehälters von diesem entfernt werden können, was bei einer einstückigen Ausbildung viel einfacher ist, als bei einer mehrstückigen Ausbildung.

Bei einer bevorzugten Ausführungsform der Erfindung weisst das Abstellelement mindestens eine Öffnung auf. Vorzugsweise hat das Abstellelement mehrere Öffnungen. Durch diese Öffnungen kann aus dem Auslauf ausgetretene und nicht durch das Gefäss aufgenommene Flüssigkeit in einem unter dem Abstellelement befindlichen Auffangbehälter gelangen.

Das Abstellelement kann insbesondere gitterförmig ausgebildet sein. Hierbei sind die Öffnungen insbesondere schlitzartig ausgebildet und parallel zueinander angeordnet.

Das Abstellelement ist insbesondere mindestens 5 mm, vorzugsweise zwischen 5 und 20 mm, beispielsweise zwischen 10 und 20 mm dick. Silikon ist verglichen mit einem Metall oder Plastik deutlich weicher und elastischer. Um trotzdem eine ausreichende Stabilität erreichen zu können, ist es vorteilhaft, wenn das Abstellelement die oben genannten Dicken aufweist. Hierdurch wird insbesondere verhindert, dass das auf dem Abstellelement abgestellte Gefäss kippen kann.

Die Getränkezubereitungsmaschine kann insbesondere einen Auffangbehälter zur Aufnahme von aus dem Auslauf ausgetretene Flüssigkeit aufweisen, wobei das Abstellelement zwischen dem Auffangbehälter und im Aufnahmebereich angeordnet ist.

Insbesondere weisst der Auffangbehälter mindestens ein Auflageelement, vorzugsweise mehrere Auflageelemente, auf, auf denen das Abstellelement auflegbar ist. Hierdurch wird eine besonders einfache Montage des Abstellelementes erreicht.

Bei der Getränkezubereitung handelt es sich insbesondere um eine Kaffeemaschine, vorzugsweise um eine Kaffeekapselmaschine.

Weitere Merkmale und Vorteile der Erfindung ergeben sich aus der nachfolgenden Beschreibung, die die Erfindung anhand von Ausführungsbeispielen im Zusammenhang mit der beigefügten Figur näher erläutert.

Es zeigt:

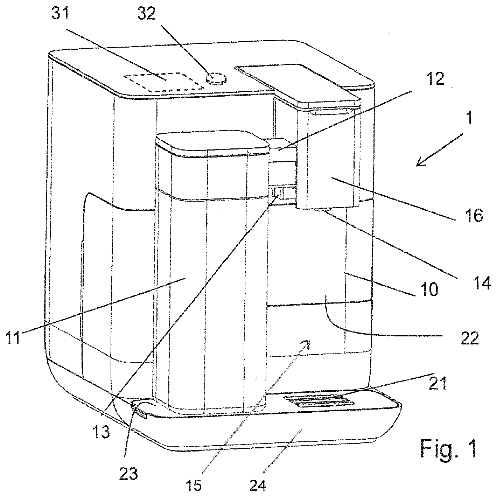

- Figur 1: eine schematische perspektive Darstellung einer Kaffeekapselmaschine.

In Figur 1 ist eine schematische, perspektive Darstellung einer als Kaffeekapselmaschine ausgebildeten Getränkezubereitungsmaschine 1 gezeigt.

Die Getränkezubereitungsmaschine 1 umfasst eine Grundeinheit 10 und ein Milchschäumergerät 11, das an die Grundeinheit 10 ankoppelbar ist und als das Milchmodul dient. Ein Andockelement 12 der in PCT/EP2015/071795 beschriebenen Art greift entsprechende Schnittstellen des Grundgeräts ab, leitet Wasser, Dampf und eventuell Luft von der Grundeinheit in das Milchschäumergerät und bildet auch eine elektrische Verbindung zur Spannungsversorgung und/oder Übermittlung von Ansteuersignalen von aktiven Elementen (insbesondere einer Pumpe) des Milchschäumergeräts. Darüber hinaus bildet das Andockelement einen Milchauslauf 13, welcher im angedockten Zustand neben dem Brühgetränkeauslauf (hier Kaffeeauslauf 14) der Grundeinheit 10 liegt.

Die Grundeinheit 10 weist einen Wasserbehälter, eine Wasserpumpe und einen Wassererhitzer auf. Weiter ist eine Brühkammer zum Zubereiten von Kaffee aus erhitztem Wasser durch Extraktion aus Kaffeepulver vorhanden, welches Kaffeepulver hier in einer Portionskapsel zur Verfügung gestellt wird, die vor der Zubereitung in die Kaffeemaschine eingelegt wird. Alternativ zur gezeichneten Ausgestaltung als Portionskapselsystem kann die Kaffeemaschine auch als sogenannter Kaffeevollautomat ausgebildet sein, welcher auch eine Kaffeemühle aufweist und das Kaffeepulver portionsweise mahlt und der Brühkammer zuführt. Als noch weitere Alternative - insbesondere wenn die Kaffeemaschine als Kolbenmaschine ausgebildet ist, d.h. die Brühkammer zwischen einem festen Teil und einem entfernbaren Kolben ausgebildet ist, kann auch vorgesehen sein, dass das Kaffeepulver vom Benutzer im bereits gemahlenen Zustand, aber lose in die Brühkammer eingebracht wird.

Ferner kann die Kaffeemaschine 1 einen Auffangbehälter 24 für verbrauchte Kaffeepulverportionen (in Kapseln oder lose, je nach Ausgestaltung der Kaffeemaschine) aufweisen. An der Kaffeemaschine ist eine Abstellelement 21 zum Abstellen eines Trinkgefässes ausgebildet. Unter dem Abstellelement 21 befindet sich eine Auffangschale.

Über dem Abstellelement 21 befindet sich der Kaffeeauslauf 14, durch welchen der gebrühte Kaffee ausläuft und in das darunter liegende Gefäss gelangt. Dieser befindet sich unter einer Auslaufhaube 16, welche einen Teil des Kaffeemaschinengehäuses bildet und den Auslauf nach vorne und zu den Seiten hin mindestens teilweise abdeckt.

Das Abstellelement 21 ist zu mindestens teilweise, vorzugsweise vollstänidig aus einem Elastomer gefertigt. Dies hat den Vorteil, dass beim Aufsetzen des Gefässes viel geringere Geräusche entstehen als bei einem üblichen Abstellelement aus Metall oder Plastik. Ferner können Abstellelemente 21 aus einem Elastomer nicht verkratzt. Als Elastomer wird insbesondere Silikon verwendet.

Das Abstellelement 21 weist mehrere Öffnungen auf, durch die aus dem Auslauf 14 ausgetretene und nicht durch das Gefäss aufgenommene Flüssigkeit in den Auffangbehälter 24 gelangt. Die Öffnungen insbesondere schlitzartig ausgebildet und parallel zueinander angeordnet. Alternativ können die Öffnungen auch andere Formen und Anordnungen aufweisen.

Die Grundeinheit 10 bildet eine Front 22 von welcher wie an sich von anderen Kaffeemaschinen bekannt einerseits das Abstellelement 21 und andererseits darüber die Auslaufhaube 16 vorsteht.

Ebenfalls vor der Front steht hier eine Milchschäumerplattform 23 vor, auf welcher das angedockte Milchschäumergerät 11 abgestellt ist.

In der Nähe des Kaffeeauslaufs 14 und hier seitlich an der Auslaufhaube 16 befindet sich eine Anschlussstelle zum Anschliessen des Andockelements an die Kaffeemaschine. Diese Anschlussstelle weist eine Dampfabgabestelle zum Koppeln an einen Dampfanschluss des Andockelements und eventuell eine Heisswasser- und/oder Dampfabgabestelle zum Koppeln an eine Durchführungsleitung für ein einigungsfluid (Heisswasser/Dampf) für das Michlschäumergerät auf. Die Dampfabgabestelle und die Heisswasser- und/oder Dampfabgabestelle werden bei Bedarf vom Wassererhitzer her mit Dampf bzw. Heisswasser versorgt, wobei beispielsweise ein Mehrwegeventil im Innern der Kaffeemaschine erhitzte Flüssigkeit bzw. Dampf wahlweise dem Brühmodul, der Dampfabgabestelle oder der Heisswasser- und/oder Dampfabgabestelle zuführen kann. Weiter sind eine Anzeigevorrichtung 31 und ein Bedienelement 32 vorhanden, die im dargestellten Ausführungsbeispiel an der Grundeinheit 10 angeordnet sind.

Das Bedienelement 32 ist ein physisches Bedienelement und hier als Dreh- Drückknopf ausgebildet, wie er von vielen Haushaltgeräten bekannt ist. Der Dreh- Drückknopf kann so programmiert sein, dass durch Drehen zwischen verschiedenen zur Auswahl stehenden Elementen (verschiedene Menüpunkte, verschiedene Zubereitungsvorschriften, sich durch Schritte voneinander unterscheidende Getränkemengen etc.) ausgewählt werden und durch Drücken in axialer Richtung die aktuelle über die Anzeigevorrichtung angezeigte Auswahl bestätigt wird.

Auch andere Bedienelemente, Kombinationen von Bedienelementen oder integrierte Lösungen, beispielsweise mit einem Touch Screen, der sowohl die Anzeigevorrichtung als auch das Bedienelement bildet, sind denkbar. Im vorliegenden Ausführungsbeispiel und generell oft bevorzugt ist die Getränkezubereitungsmaschine so ausgebildet, dass sie als Standalone-Gerät voll funktionsfähig und ohne das nachstehend beschriebene externe Bediengerät bedienbar ist, d.h. alle für einen Betrieb wirklich notwendigen Eingaben und Informationsausgaben können über das geräteeigene Benutzerinterface erfolgen, was nicht ausschliesst, das optional gewisse nicht betriebsnotwendige Funktionalitäten - bspw. die Einstellung von relativen Mengen - eine Eingabe über das Bediengerät voraussetzen.

Auch ist hier die Grundeinheit (Kapselkaffeemaschine) so ausgebildet, dass sie auch ohne das Milchmodul betrieben werden kann, wobei bevorzugt die An- oder Abwesenheit des Milchmoduls detektierbar ist und die entsprechenden (Milch-) Funktionen nur zur Verfügung stehen, wenn das Milchmodul angekoppelt ist.

### Bezugszeichenliste

1 Getränkezubereitungsmaschine
10 Grundeinheit
11 Milchschäumergerät
12 Andockelement
13 Milchauslauf
14 Kaffeeauslauf
15 Aufnahmebereich
16 Auslaufhaube
21 Abstellelement
22 Front
23 Milchschäumerplattform
31 Anzeigevorrichtung
32 Bedienelement

## Patentansprüche

1. Getränkezubereitungsmaschine (1),
mit einem Auslauf (14) zur Abgabe eines zubereiteten Getränkes,
einem Aufnahmebereich (15) zur Aufnahme eines Gefässes zur Aufnahme des zubereiteten Getränkes,
einem Abstellelement (21), das den Aufnahmebereich (15) in die dem Auslauf (14) gegenüberliegende Seite begrenzt und auf dem das Gefäss während der Getränkezubereitung abstellbar ist,
**dadurch gekennzeichnet, dass** das Abstellelement (21) zumindest teilweise aus einem Elastomer gefertigt ist.

2. Getränkezubereitungsmaschine (1) nach Anspruch 1, **dadurch gekennzeichnet, dass** das Abstellelement (21) vollständig aus dem Elastomer gefertigt ist.

3. Getränkezubereitungsmaschine (1) nach Anspruch 1 oder 2, **dadurch gekennzeichnet, dass** das Elastomer mindestens einen Naturkautschuk, mindestens einen Silikonkautschuk, mindestens ein Silikon, mindestens ein Silikonharz und/oder mindestens ein Fluorsilikon umfasst.

4. Getränkezubereitungsmaschine (1) nach Anspruch 1 oder 2, **dadurch gekennzeichnet, dass** das Abstellelement (21) aus einem Silikon besteht.

5. Getränkezubereitungsmaschine (1) nach einem der vorhergehenden Ansprüche, **dadurch gekennzeichnet, dass** das Abstellelement einstückig ausgebildet ist.

6. Getränkezubereitungsmaschine (1) nach einem der vorhergehenden Ansprüche, **dadurch gekennzeichnet, dass** das Abstellelement (21) mindestens eine Öffnung aufweist.

7. Getränkezubereitungsmaschine (1) nach Anspruch 6, **dadurch gekennzeichnet, dass** das Abstellelement (21) mehrere Öffnungen aufweist.

8. Getränkezubereitungsmaschine (1) nach einem der vorhergehenden Ansprüche, **dadurch gekennzeichnet, dass** das Abstellelement (21) gitterförmig ausgebildet ist.

9. Getränkezubereitungsmaschine (1) nach einem der vorhergehenden Ansprüche, **dadurch gekennzeichnet, dass** das Abstellelement (21) mindestens 5 mm dick ist.

10. Getränkezubereitungsmaschine (1) nach Anspruch 9, **dadurch gekennzeichnet, dass** das Abstellelement (21) mindestens 10 mm dick ist.

11. Getränkezubereitungsmaschine (1) nach Anspruch 10, **dadurch gekennzeichnet, dass** das Abstellelement (21) mindestens 20 mm dick ist.

12. Getränkezubereitungsmaschine (1) nach einem der vorhergehenden Ansprüche, **dadurch gekennzeichnet, dass** die Getränkezubereitungsmaschine (1) einen Auffangbehälter (24) zur Aufnahme von aus dem Auslauf (14) ausgetretener Flüssigkeit umfasst, und dass das Abstellelement (21) zwischen dem Auffangbehälter (24) und dem Ausnahmebereich (15) angeordnet ist.

13. Getränkezubereitungsmaschine (1) nach Anspruch 12, **dadurch gekennzeichnet, dass** der Auffangbehälter (24) Auflageelemente aufweist, auf denen das Abstellelement (21) auflegbar ist.

14. Getränkezubereitungsmaschine (1) nach einem der vorhergehenden Ansprüche, **dadurch gekennzeichnet, dass** die Getränkezubereitungsmaschine (1) eine Kaffeemaschine ist.

15. Getränkezubereitungsmaschine (1) nach Anspruch 14, **dadurch gekennzeichnet, dass** die Getränkezubereitungsmaschine (1) eine Kaffeekapselmaschine ist.
